# EUROPEAN PATENT APPLICATION

(11) **EP 2 626 781 A1**
(43) Date of publication of application: **14.08.2013**
(21) Application number: 13154364.7
(22) Date of filing: 07.02.2013
(51) Int. Cl.: G06F 3/16, G09B 5/04

(54) **Electronic apparatus and audio guide program**

(30) Priority: 07.02.2012 JP 2012024203; 06.02.2013 JP 2013021052
(71) Applicant: YAMAHA CORPORATION, Hamamatsu-shi Shizuoka-ken 430-8650 (JP)
(72) Inventor: Fukada, Atsushi, Shizuoka-ken, 430-8650 (JP)
(74) Representative: HOFFMANN EITLE

(57) **Abstract**

In an electronic apparatus, a function selection unit selects a function to be executed. A storage unit stores a table defining correspondence between a plurality of functions and a plurality of audio data. An audio data specifying unit specifies audio data corresponding to the function selected by the function selection unit with reference to the table. A search target determination unit determines whether or not a source of the audio data exists as a search target. A search unit searches the source for the audio data specified by the audio data specifying unit when the search target determination unit determines that the source exists. A playback unit plays back the audio data located by the search unit.

## Description

### BACKGROUND OF THE INVENTION

### [Technical Field of the Invention]

The present invention relates to an electronic apparatus and an audio guide program.

### [Description of the Related Art]

In general, a conventional multi-function electronic musical instrument includes a display mounted on a main body panel to display a current function, a selected parameter and a set state (parameter value, etc.). A user can select, set, change and check various functions and parameters by manipulating physical switches provided to the main body panel or, when the display is a touch panel, by directly manipulating the touch panel.

However, it is very difficult for users who are visually handicapped to manipulate the multi-function electronic musical instrument because they cannot view the display. Accordingly, a current display state or set state is signaled through an audio guide.

Audio guide techniques include a method of preparing voice corresponding to a manipulation menu in advance and playing the voice when a user manipulates a button (e.g. patent reference 1). Furthermore, text information currently displayed on a screen is output as a voice using voice synthesis according to an application executed on a high-throughput computer (e.g. non-patent reference 1).

[Patent Reference 1] Japanese Patent Application Publication No. 2000-206964

[Non-Patent Reference 1] Eiich Miyazaki "The trial Production of the Novisual Web Access Using Synthetic Speech" Bull. Educ. Res. Teach. Develop. Kagawa Univ., 8: 125-133, 2004.

As known, when audio guide data is prepared in advance and used for audio guide, it is necessary to previously embed audio guide data corresponding to all manipulation menus in products. This requires costs for product development.

For example, the number of development processes is increased due to audio guide data recording tasks. Furthermore, it may be necessary to perform a process for correcting recorded data whenever specifications are changed during development. Moreover, a translation process and a recording process are needed to handle multiple languages, and thus as many processes as the number of languages are added. This increases product costs and places a burden on users who do not need audio guides. In addition, even when a user needs an audio guide, he/she needs only one or two languages, and thus an audio guide for unnecessary languages may be included in products.

Furthermore, since it is necessary to embed a vast amount of audio data, a large-capacity memory is needed, increasing component costs.

While a method of performing audio guide by synthesizing a voice using text information does not require a development process such as a recording process, this requires a voice synthesis engine for generating a voice in real time, and thus component costs increase.

Moreover, in the technology of previously embedding audio guide data in products, only an audio guide with respect to content determined during product design can be performed. Since users have different levels of knowledge about functions of an electronic musical instrument, it is preferable to perform audio guidance differently for respective users, such as a novice and an experienced user. However, this customized scheme cannot be achieved.

### SUMMARY OF THE INVENTION

In view of the drawbacks of the prior art noted above, an object of the present invention is to provide a customizable audio guide function inexpensively.

According to one aspect of the present invention, an electronic apparatus has a plurality of functions executable for operating the electronic apparatus, and comprises: a function selection unit that selects a function to be executed; a storage unit that stores information defining correspondence between a plurality of functions and a plurality of audio data; an audio data specifying unit that specifies audio data corresponding to the function selected by the function selection unit with reference to the information; a search target determination unit that determines whether or not a source of the audio data exists as a search target; a search unit that searches the source for the audio data specified by the audio data specifying unit when the search target determination unit determines that the source exists; and a playback unit that plays back the audio data searched by the search unit.

According to the present invention, it is possible to provide a customizable audio guide function inexpensively.

### BRIEF DESCRIPTION OF THE DRAWINGS

FIG. 1 is a block diagram illustrating an exemplary hardware configuration of an electronic musical instrument according to an embodiment of the invention.
FIG. 2 is a block diagram illustrating an audio guide function of the electronic musical instrument according to an embodiment of the invention.
FIG. 3 illustrates an exemplary data configuration according to an embodiment of the present invention.
FIGS. 4(A) and 4(B) are exemplary matching tables showing the relationship between audio guide data and function IDs or parameter values according to an embodiment of the present invention.
FIGS. 5(A) and 5(B) are a plan view of a main body panel for explaining the audio guide function according to an embodiment of the present invention.
FIG. 6 is a flowchart illustrating an audio guide process according to an embodiment of the present invention.
FIG. 7 is a flowchart illustrating a file search and playback process executed in step SA5 of FIG. 6.
FIG. 8 is a flowchart illustrating an audio playback process according to an embodiment of the present invention.

### DETAILED DESCRIPTION OF THE INVNETION

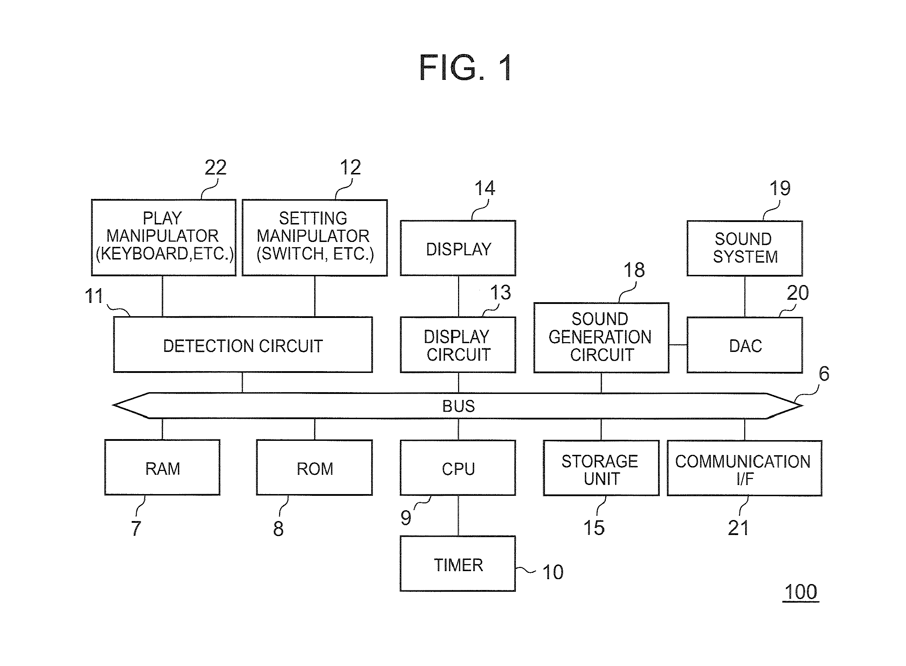

FIG. 1 is a block diagram illustrating an exemplary hardware configuration of an electronic musical instrument 100 according to an embodiment of the invention.

A RAM 7, a ROM 8, a CPU 9, a detection circuit 11, a display circuit 13, a storage unit 15, a sound generation circuit 18, and a communication interface (I/F) 21 are connected to a bus 6 of the electronic musical instrument (electronic apparatus) 100.

The RAM 7 has a working area for the CPU 9, and provides a buffer area of a playback buffer or the like, a flag, a register, various parameters, etc.

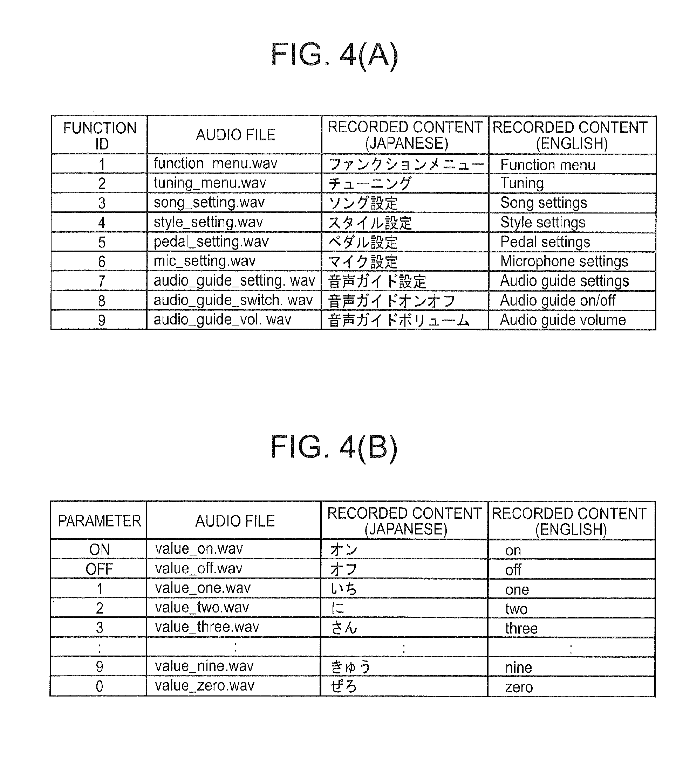

The ROM 8 stores a variety of data files such as waveform data, automatic playback data, automatic accompaniment data (play style data) and the like, parameters, a control program, or a program for implementing the present embodiment, tables shown in FIGS. 4(A) and 4(B), etc.

The CPU 9 performs computation or device control according to the control program stored in the ROM 8 or the storage unit 15 or according to an audio guide program for implementing the present embodiment. A timer 10 is connected to the CPU 9, and a basic clock signal, an interruption timing signal, etc. are provided to the CPU 9.

A user can perform input, setting and selection using a setting manipulator 12 connected to the detection circuit 11. For example, the setting manipulator 12 can be any device that can output a signal corresponding to user input, such as a switch, a pad, a fader, a slider, a rotary encoder, a joystick, jog & shuttle, a keyboard for inputting characters, a mouse, etc. Furthermore, the setting manipulator 12 may be a soft switch displayed on a display 14, which is manipulated using a different manipulator such as a cursor switch. In the present embodiment of the invention, a touch panel is used as a function selection unit (setting manipulator 12) in addition to the physical switch arranged on the main body panel.

The touch panel is a manipulator that senses a touch operation of the user, which is applied to a touch panel manipulation plane provided to the surface of the display 14, and outputs position information (e.g., xy coordinates) of a touched point. In the present embodiment of the invention, the touch panel is used as the setting manipulator 12 and the position information output from the touch panel and a command executed by the electronic instrument 100 are matched. Matching of the position information and the command depends on information displayed on the display 14. In the present embodiment of the invention, the touch panel manipulation plane and the display 14 are combined and called a touch panel.

The display circuit 13 is connected to the display 14 and can display information on the display 14. The display 14 can display various types of information for setting the electronic musical instrument 100.

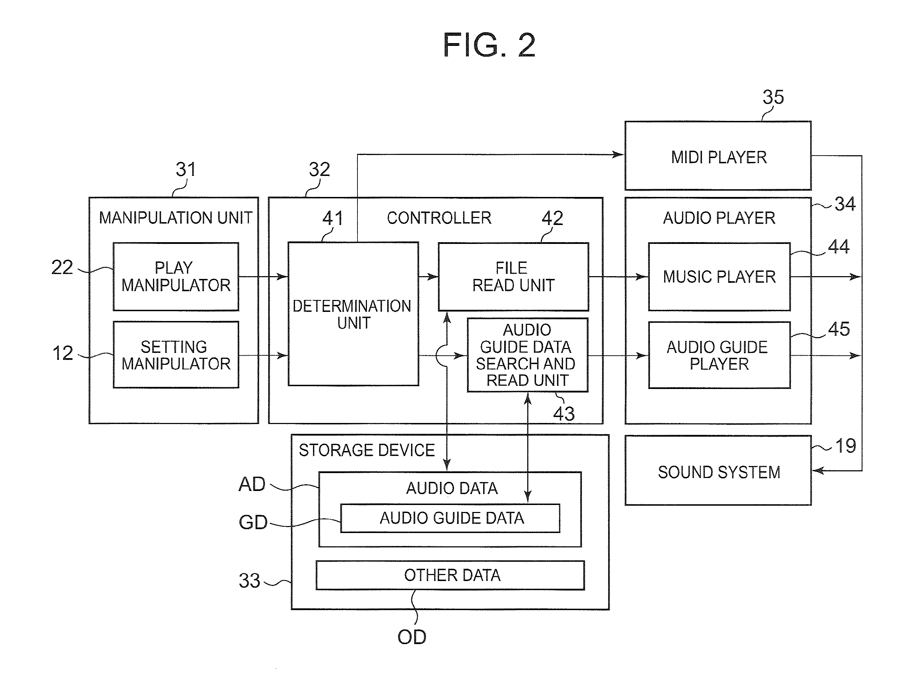

The storage unit 15 is composed of a combination of a recording medium and a driver for driving the recording medium. The recording medium is selected from at least one of recording media such as a hard disk, FD (flexible disk or floppy disc (registered trade mark)), CD (compact disc), DVD (digital versatile disc), a semiconductor memory such as a flash memory and the like. A recording medium includes an area rewritable by the user in order to add audio guide data to the recording medium. The recording medium is preferably detachable. The storage unit 15 stores audio guide data GD (shown in FIG. 2) which is provided by the manufacturer of the electronic musical instrument 100 or a third party, or is generated by the user, audio data AD (shown in FIG. 2), other data OD (shown in FIG. 2) including a plurality of automatic playback data and automatic accompaniment data (accompaniment style data), etc.

The sound generation circuit 18 generates a music signal according to the audio guide data GD, audio data AD, automatic playback data and automatic accompaniment data stored in the storage unit 15, ROM 8 or RAM 7, and according to a play signal, a MIDI signal, phrase waveform data or the like, provided by an external musical instrument connected to the play manipulator (keyboard) 22 or the communication interface 21, then adds various musical effects to the music signal, and provides the resultant music signal to a sound system 19 via a DAC 20. The DAC 20 converts the music signal in a digital format into an analog signal. The sound system 19 includes an amplifier and a speaker and outputs the digital-to-analog-converted music signal as sound.

The communication interface 21 is composed of at least one of a general-purpose short-range wired I/F such as USB and IEEE 1394, a communication interface such as a general-purpose network I/F, for example, Ethernet (registered trademark), a general-purpose I/F such as MIDI I/F, a communication interface such as general-purpose short-range wireless I/F, for example, wireless LAN and Bluetooth (registered trademark), and a wireless communication interface for music only, and can communicate with an external device, a server, etc.

The play manipulator (keyboard) 22 is connected to the detection circuit 11 and provides play information (play data) according to a playing operation of the user. The play manipulator 22 is a manipulator by which the user plays the electronic musical instrument. Start timing and end timing of manipulation of the user, applied to the manipulator, are input to the play manipulator 22 as a key-on signal and a key-off signal, respectively, at a pitch corresponding to a manipulator manipulated by the user. It is possible to input various parameters such as a velocity corresponding to play of the user to the play manipulator 22.

When the electronic musical instrument according to the present embodiment does not include the play manipulator such as a keyboard, for example, when the electronic musical instrument is a sound source device, the play manipulator 22 can be omitted. In this case, it is possible to connect an external play manipulator to the communication interface 21 and use the external play manipulator instead of the play manipulator 22. Furthermore, the display 14 and the sound system 19 can use an external device, and other components may be appropriately added or omitted as necessary.

FIG. 2 is a block diagram illustrating an audio guide function of the electronic musical instrument 100 according to an embodiment of the invention.

The audio guide function according to embodiments of the present invention is implemented by a manipulation unit 31, a controller 32, a storage device 33, an audio player 34, a MIDI player 35, and the sound system 19. The MIDI player 35 may be omitted as necessary.

The manipulation unit (function selection unit) 31 corresponds to the play manipulator 22 and the setting manipulator 12 shown in FIG. 1 and receives an input manipulation of the user. The setting manipulator 12 includes the display 14 (shown in FIG. 1) and the touch panel composed of the touch manipulation plane provided to the screen of the display 14, as described above.

The user selects various functions using the setting manipulator 12. Here, a selected function may be any function executed in the electronic musical instrument 100, such as a function of switching to a predetermined mode, a function of selecting a predetermined parameter, a function of setting or changing a parameter value, a function of reproducing automatic playback data and automatic accompaniment data and interrupting reproduction of the automatic playback data and automatic accompaniment data, a function of switching or changing a display screen, an audio guide on/off function, a function of setting and changing the audio guide function, etc. The manipulation unit 31 as the function selection unit may be a soft switch manipulated by a mouse or a joystick connected to the electronic musical instrument 100 as well as a physical switch provided to the touch panel or the main body panel. Otherwise, the play manipulator 22 can be used as the function selection unit.

The controller 32 is composed of the CPU 9 shown in FIG. 1 and includes a determination unit 41, a file read unit 42 and an audio guide data search and read unit 43.

The determination unit 41 controls the MIDI player 35, the file read unit 42 and the audio guide data search and read unit 43 according to a signal based on manipulation applied to the manipulation unit 31. Specifically, if an input signal is generated by playing operation (operation of pressing or releasing a key) performed through the play manipulator 22, the determination unit 41 instructs the MIDI player 35 to generate music corresponding to the playing operation. If the input signal corresponds to an instruction for selecting audio data AD, the determination unit 41 instructs the file read unit 42 to read the audio data AD corresponding to the instruction from the storage device 33. When the input signal corresponds to manipulation assigned a function ID, the determination unit 41 instructs the audio guide data search and read unit 43 to search the storage device 33 for appropriate audio guide data GD corresponding to the manipulation and to read the audio guide data GD in order to execute the audio guide function. When a manipulation with respect to a different process is applied, the determination unit 41 instructs a component for performing a process corresponding to the manipulation to perform the process.

The file read unit 42 reads the audio data AD from the storage device 33 according to an instruction from the determination unit 41 and transmits the read audio data AD to a music player 44 included in the audio player 34.

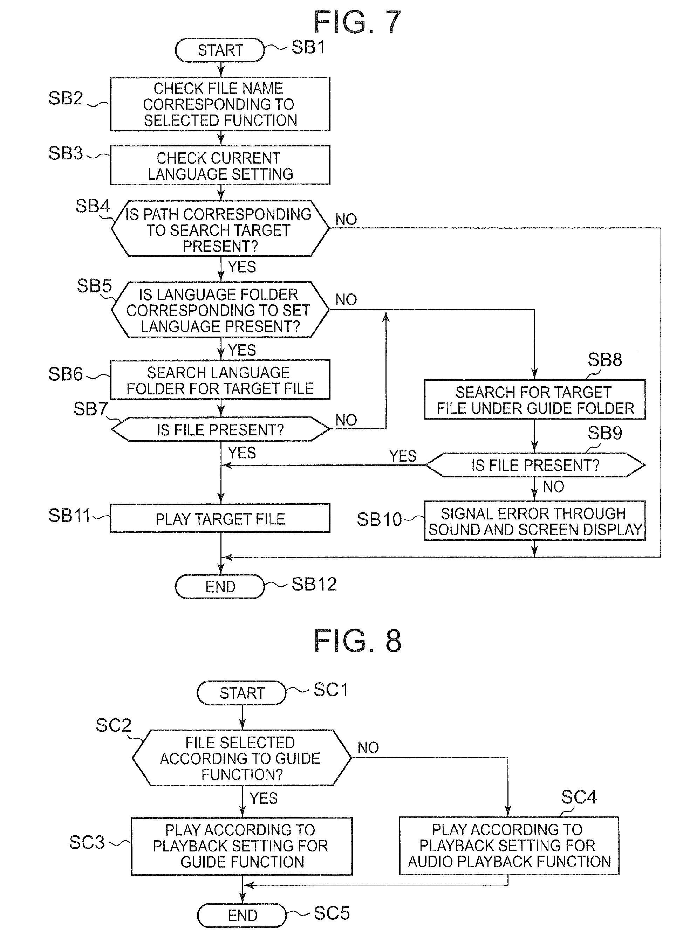

The audio guide data search and read unit 43 reads the audio guide data GD from the storage device 33 in response to an instruction from the determination unit 41 and transmits the read audio guide data GD to an audio guide player 45 included in the audio player 34. The audio guide data is searched and read in such a manner that audio guide data GD corresponding to a function ID allocated to a manipulation of the manipulation unit 31 is specified as a target file according to the tables shown in FIGS. 4(A) and 4(B). For example, the storage device 33 is searched for the specified file and the located file is read. This process will be described in detail below with reference to the flowchart shown in FIG. 7.

The storage device 33 is composed of an external storage unit corresponding to the storage unit 15 shown in FIG. 1 when the storage unit 15 is implemented as an external device. Specifically, the storage device 33 is composed of a semiconductor memory such as a USB memory or a detachable recording medium such as a CD-ROM, DVD-ROM, etc. and stores audio data AD including the audio guide data GD and other data OD. The recording medium as the storage device 33 may be provided by the manufacturer of the electronic musical instrument 100 or a third party, or provided by the user. Data stored in the recording medium may also be provided by the manufacturer of the electronic musical instrument 100 or a third party, or provided by the user.

The audio guide data GD is audio data (voice data) used to inform the user of setting and states of the electronic musical instrument 100, selection and setting of parameters, a display state, a current value, etc. through voice. The audio guide data GD can be played back by a known audio data playback process because the audio guide data GD is in a known audio data format such as a WAV or MP3 format. The audio guide data GD are provided for various function selection manipulations performed by the user, as shown in FIGS. 4(A) and 4(B), which will be described below, and thus the audio guide data GD is automatically played back when the user performs a function selection manipulation.

The audio data AD is music data composed in a known audio data format such as WAV or MP3, like the audio guide data GD, and can be played back by a known audio data playback process. The audio data AD may be recorded data of performance of the user using the electronic musical instrument 100 or music transmitted to the storage device 33 from an external device such as a music CD, a computer or the like. The audio data AD is played back when the user designates desired music and plays the designated music.

The format of the audio data AD (audio guide data GD) is not limited to a specific one, and audio data (voice data) in formats of a plurality of types can be present.

The other data OD includes automatic playback data such as MIDI data, style data for automatic accompaniment, etc., for example.

The storage device 33 is not limited to a detachable element and may be included in the electronic musical instrument 100 as an internal memory region. In this case, data stored in the storage device 33 can be updated by transmitting the audio guide data GD from an external device (a personal computer or a server) through a communication network. Otherwise, the storage device 33 may be set in another electronic musical instrument or a computer such as a server, connected via a network such as the Internet or a LAN.
The electronic musical instrument 100 shown in FIGS. 1 and 2 is a typical one of an electronic apparatus according to the invention, which has a plurality of functions executable for operating the electronic apparatus and which is composed of a function selection unit, a storage unit, an audio data specifying unit, a search target determination unit, a search unit, and a playback unit. In the disclosed embodiment shown in FIG. 2, the function selection unit is provided in the form of the manipulation unit 31 that selects a function to be executed. The storage unit is provided in the form of the storage device 33 that stores a table defining correspondence between a plurality of functions and a plurality of audio data GD. The audio data specifying unit is provided in the form of the audio guide data search and read unit 43 that specifies audio data corresponding to the function selected by the function selection unit with reference to the table. The search target determination unit is also provided in the form of the audio guide data search and read unit 43 that determines whether or not a source of the audio data GD exists as a search target. In this embodiment, the source of audio data GD exists in the storage device 33. The search unit is also provided in the form of the audio guide data search and read unit 43 that searches the source for the audio data specified by the audio data specifying unit when the search target determination unit determines that the source exists. The playback unit is provided in the form of the audio guide player 45 that plays back the audio data located by the search unit.
Preferably, the source of the audio data comprises an external storage medium such as USB or CD-ROM storing the audio data and being connectable to the electronic apparatus. In such a case, the search target determination unit determines that the source of the audio data exists if the external storage medium is connected to the electronic apparatus.
Alternatively, the source of the audio data may be provided in the form of an internal memory region of ROM 8 storing the audio data and being provided in the electronic apparatus. In such a case, the search target determination unit determines that the source of the audio data exists if the internal memory region is accessible.
Otherwise, the source of the audio data comprises a server apparatus providing the audio data and being accessible from the electronic apparatus through a network. In such a case, the search target determination unit determines that the source of the audio data exists if the server apparatus is available over the network.

The audio player (voice data reproduction unit) 34 is composed of the sound generation circuit 18 and the DAC 20 shown in FIG. 1, for example, and includes the music player 44 and the audio guide player 45. The audio player 34 may be implemented as an external device (personal computer or the like). In this case, the audio guide data GD stored in the storage device 33 may be transmitted to the external device upon manipulation of the main body of the electronic musical instrument 100 and played back by the external device.

The music player 44 generates a music signal based on the audio data AD read by the file read unit 42 from the storage device 33 and transmits the music signal to the sound system 19.

The audio guide player 45 generates an audio signal based on the audio guide data GD read by the audio guide data search and read unit 43 from the storage device 33 and transmits the audio signal to the sound system 19.

The MIDI player 35 is composed of the sound generation circuit 18 and the DAC 20 shown in FIG. 1, generates a music signal based on a play signal input from the play manipulator 22 of the manipulation unit 31 and transmits the music signal to the sound system 19.

The sound system 19 amplifies the music signals or audio signal transmitted from the music player 44, the audio guide player 45 and the MIDI player 35 and outputs the amplified signals as sounds. While the sound system 19 can be a single system, the sound system 19 preferably includes a plurality of systems. For example, the sound system 19 can be constructed in such a manner that music signals from the music player 44 and the MIDI player 35 are output from a speaker and an audio signal from the audio guide player 45 is output from a headphone monitor. In this case, an audience cannot hear the sound of audio guide while a player (user) can hear the sound of audio guide.

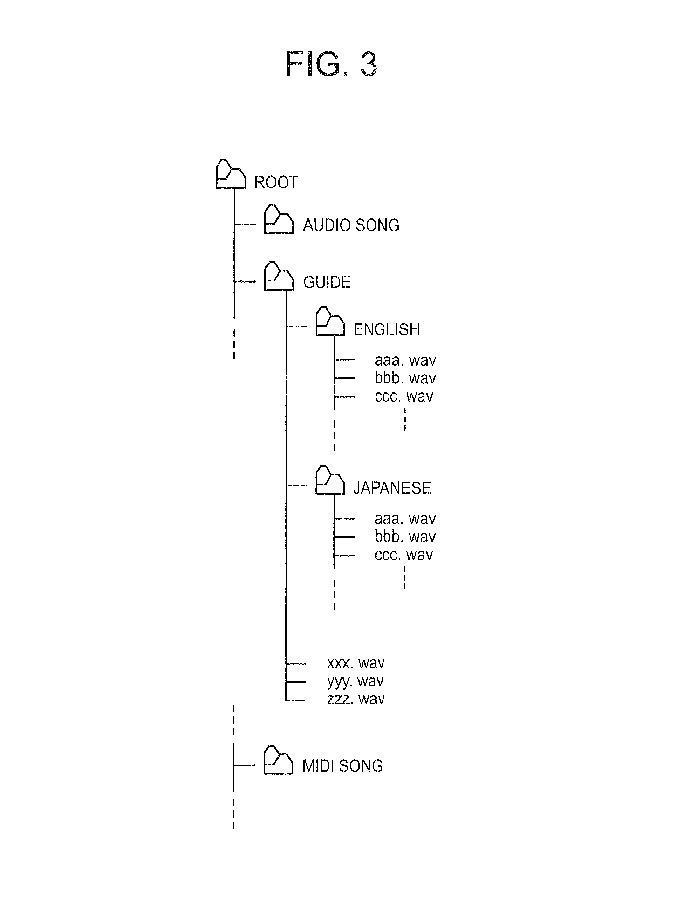

FIG. 3 illustrates an exemplary data configuration according to an embodiment of the present invention. The storage device 33, shown in FIG. 2, stores various types of data in a hierarchical structure as shown in FIG. 3, for example.

In the present embodiment of the invention, audio data in a GUIDE folder (folder for audio guide) is recognized as the source of audio guide data GD and becomes a search target to be read in the audio guide function. Accordingly, the audio guide data GD is stored in the GUIDE folder under a ROOT folder.

The user locates self-crated or acquired audio guide data GD right under the GUIDE folder (e.g. in a file 'xxx.wav' shown in FIG. 3) or creates a language folder such as 'JAPANESE' or 'ENGLISH' in the GUIDE folder and stores the audio guide data GD in the created language folder (e.g. a file 'aaa.wav' shown in FIG. 3).

The electronic musical instrument 100 according to the present embodiment of the invention has a language setting function for setting a language of a menu or a message displayed on the screen of the display 14 (shown in FIG. 1), and thus a desired language of the user can be set from among a plurality of languages such as 'Japanese', 'English', etc. Here, a search target folder is changed according to the set language when the storage device 33 (shown in FIG. 2) is searched for the audio guide data GD.

It is preferable to determine a folder name that can be used for a language folder on the basis of the language setting function of the electronic musical instrument 100. For example, if 'Japanese', 'English', 'German', 'French' and 'Italian' can be set as languages of the electronic musical instrument 100, respective labels 'JAPANESE', 'ENGLISH', 'GERMAN', 'FRENCH' and 'ITALIAN' can be used as language folder names. However, language folder names are not limited thereto and the user may freely set the language folder names. In this case, information for representing a language folder and a language corresponding to the language folder is needed.

When a manipulation of the user, which requires the audio guide function, is detected through the electronic musical instrument 100, a file name of audio guide data GD played back as an audio guide according to the manipulation is determined with reference to the table shown in FIG. 4(A) or 4(B), which will be described below. Here, a folder that is searched for a file corresponding to the determined file name is decided on the basis of a set language of the electronic musical instrument 100 when the manipulation is performed. For example, if the language is set to 'JAPANESE', when the manipulation requiring the audio guide function is performed, 'drive: /GUIDE/JAPANESE)' is searched for audio guide data GD (e.g. bbb.wav) corresponding to the manipulation. When the file 'bbb.wav' is detected, this file is read and played.

The same file name is assigned to audio guide data GD corresponding to the same function, parameter, command, or display screen, and the audio guide data GD assigned the same file name is stored in different language folders, such that an audio guide function corresponding to a set language is executed with reference to language setting of the electronic musical instrument 100. Accordingly, when a plurality of users who use different languages commonly uses a single device, it is possible to provide an audio guide in an appropriate language for each user. Otherwise, if a single user or users using the same language use the device, audio guide data corresponding to the language is stored in the storage device 33 and audio guide data in a different language can be added when a user using the different language uses the device.

A folder other than the audio guide folder (GUIDE folder) may be present in the ROOT folder of the storage device 33 of FIG. 2. For example, as shown in FIG. 3, an AUDIO SONG folder that stores audio data AD playable by the music player 44 (shown in FIG. 2) and a MIDI SONG folder that stores automatic playback data or accompaniment style data in a MIDI format, which can be played by the MIDI player 35 (shown in FIG. 2), can be present.

FIGS. 4(A) and 4(B) are exemplary matching tables showing the relationship between audio guide data and function IDs or parameter values according to an embodiment of the present invention.

FIG. 4(A) shows a table that defines correspondence between audio guide data and function IDs according to an embodiment of the present invention.

In the table that associates audio guide data to function IDs, function IDs and audio file names (file names of audio guide data GD) corresponding to the function IDs are defined. While recorded contents of files are not defined in the matching table, FIG. 4(A) shows contents recorded in Japanese, which correspond to audio files respectively matched to the function IDs and contents recorded in English, which correspond to the audio files respectively matched to the function IDs, as an example. The user or the manufacturer of the electronic musical instrument 100 can create audio files by recording the content using a voice, attach file names defined in the table to the created audio files and store the audio files so as to use the audio files as audio guide data GD. A function ID is allocated to a manipulation for executing a function that requires audio guide (audio output) from among functions of the electronic musical instrument 100, selected by the manipulation unit (function selection unit) 31 shown in FIG. 2 (hereinafter, the manipulation is simply referred to as 'audio guide manipulation' or 'manipulation assigned a function ID').

When the user manipulates the electronic musical instrument 100, it is determined whether a function ID is allocated to the manipulation and, when a function ID is allocated to the manipulation, an audio file name corresponding to the function ID is acquired with reference to the matching table.

FIG. 4(B) shows an exemplary matching table of audio guide data and parameter values according to an embodiment of the present invention.

In the matching table shown in FIG. 4(B), parameter values and file names of audio guide data GD are matched and defined.

In the present embodiment of the invention, when the user manipulates an on/off switch (or a slider image on the touch panel), data of an audio file name corresponding to 'ON' or 'OFF' of the matching table is read with reference to the matching table and played back. When the user manipulates a physical slider (or a slider image on the touch panel) for setting a parameter value, figures corresponding to the parameter value are read aloud. Provided that the figures are 1, 2 and 3, for example, data of a file name corresponding to '1', data of a file name corresponding to '2' and data of a file name corresponding to '3' are read and output with reference to the matching table. Even when a value greater than 10 is read aloud, audio guidance is performed only using 10 audio guide data GD corresponding to digits 0 to 9. Audio guide data GD for reading figures is not limited to ten and a plurality of data may be prepared. For example, audio guide data GD corresponding to '10' and '100' can be prepared. Furthermore, audio guide data GD is not limited to 'ON', 'OFF' and figures, and audio guide data GD corresponding to symbols '+' and '-', for example, can be provided.

As described above, the present embodiment of the invention allocates a function ID to each manipulation that requires audio guide and specifies the name of audio guide data GD corresponding to the function ID. Accordingly, it is possible to use a file created by the user or a file obtained after the electronic musical instrument is acquired as audio guide data GD by storing audio data in the file name corresponding to the function ID under the GUIDE folder or in a language folder corresponding to the language of the audio file. Therefore, it is possible to provide audio guide data GD customized for each user by recording the audio guide data GD in a recording medium or distributing the recorded audio guide data GD or downloading the audio guide data GD from a site on the Internet.

When a technical term is difficult to recognize, for example, it is possible to provide audio guide data GD corresponding to an easy word converted from the technical term. Furthermore, for a user who uses a language different from the language used in the electronic musical instrument, audio guide data GD created in the language of the user can be provided.

Therefore, addition and update of audio guide data GD can be easily performed even when a guide voice is not previously stored in the electronic musical instrument, and thus it is not necessary for the manufacturer of the electronic musical instrument to incorporate recording and translation into a product development process and the user can use an appropriate audio guide function by acquiring or creating a necessary guide voice.

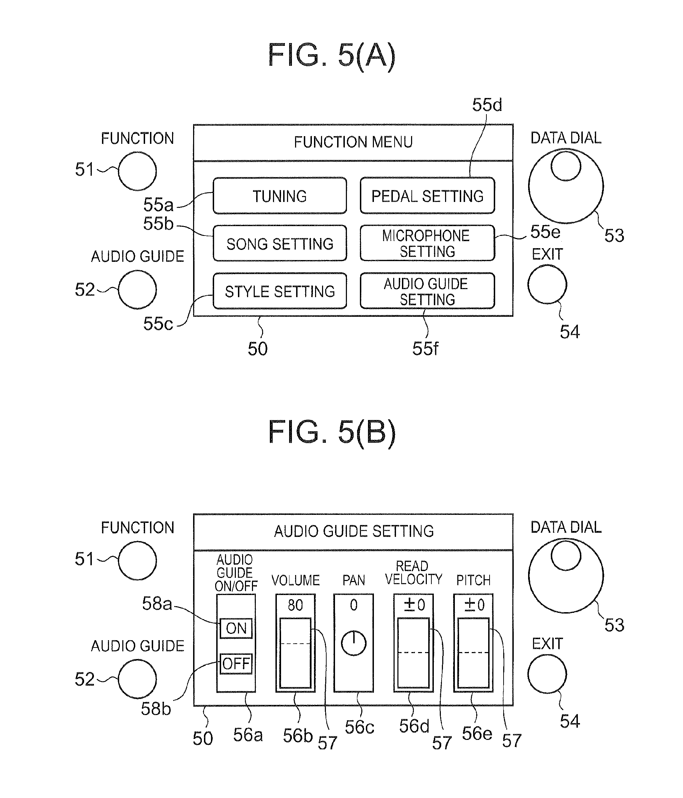

FIGS. 5(A) and 5(B) are a plan view of part of the main body panel of the electronic musical instrument 100 for explaining the audio guide function according to an embodiment of the present invention.

The main body panel of the electronic musical instrument 100 according to the present embodiment includes at least a touch panel 50 arranged thereon. The setting manipulator 12 including various physical switches, dials, etc. (a function button 51, an audio guide button 52, a parameter change dial 53, and an EXIT button 54) is arranged around the touch panel 50.

The function button (FUNCTION) 51 is a button to which a command for switching to a function menu display screen when the user presses this button is allocated. The function menu display screen is shown in FIG. 5(A).

The audio guide button 52 is a predetermined button to which a command for playing only voice for audio guide is allocated. In the present embodiment, if the user manipulates a specific button on the panel or display on the touch panel when the audio guide function of the electronic musical instrument 100 is on, a function corresponding to the manipulation is executed and, at the same time, audio guide data GD corresponding to the manipulation is played back. However, when the user manipulates another button or display on the touch panel while pressing the audio guide button 52, the function corresponding to the manipulation is not executed and the audio guide data GD corresponding to the manipulation is played back.

A button (audio guide instruction means) for instructing only voice for audio guide to be played need not be a physical button such as the audio guide button 52 shown in FIG. 5(A). For example, the audio guide instruction function may be allocated to an assignable switch or pedal that can be assigned to an arbitrary function. Alternatively, it is possible to use a button that is not frequently used (e.g. a button for performing a demonstration operation) as the audio guide instruction means only when the audio guide function is on.

The parameter change dial 53 can be turned left or right to increase or decrease a parameter value. The EXIT button 54 is a button to which a command for returning to the previous screen before the current screen or a screen of a higher layer is allocated.

Function IDs for respectively indicating functions corresponding to the manipulator 12 or regions on the touch panel, to which commands for executing functions with respect to the audio guide function are allocated, are respectively matched to the manipulator 12 and regions on the touch panel. As described with reference to FIG. 4(A), audio guide data GD is matched to each function ID.
It is assumed that the audio guide function of the electronic musical instrument 100 is turned on in advance (an ON button 58a which will be described below is pressed).

In the example of FIG. 5(A), a function menu is displayed on the touch panel 50, and a plurality of buttons to which commands for switching various function setting screens are allocated is arranged in the function menu. In this example, the plurality of buttons includes a button 55a for switching to a tuning setting screen, a button 55b for switching to a song setting screen, a button 55c for switching to a style setting screen, a button 55d for switching to a pedal setting screen, a button 55e for switching to a microphone setting screen, and a button 55f for switching to an audio guide setting screen. The function IDs 1 to 7 of the table shown in FIG. 4(A) are respectively allocated to the function button 51 and buttons 55a to 55f.

When the user pushes the audio guide setting button 55f while pressing the audio guide button 52 under the state where the audio guide function is turned on, 'audio_guide_setting.wav' is read with reference to the matching table of FIG. 4(A) and a voice 'audio guide is set' is output from the sound system 19 (shown in FIG. 1). At this time, the command for switching to the audio guide setting menu, which is assigned to the audio guide setting button 55f, is not executed and screen display shown in FIG. 5(A) is not changed. When the audio guide button 52 is released and the audio guide setting button 55f is pressed, the command for switching to the audio guide setting menu is executed and display on the touch panel 50 switches to the audio guide setting menu shown in FIG. 5(B).

Accordingly, when a blind user manipulates the electronic musical instrument 100, he/she checks whether a desired manipulator is an intended one by hearing audio guide without switching the display screen and, when the manipulator is the intended one, operates the manipulator. Accordingly, the blind user can easily manipulate the electronic musical instrument 100.

When the user pushes down the function button 51 while pressing the audio guide button 52, 'function_menu.wav' is read with reference to the matching table of FIG. 4(A) and audio guide 'function menu' is played.

In this case, recorded contents of 'function_menu.wav' may include contents of setting items included in the function menu screen. For example, if the screen shown in FIG. 5(A) is used as the function menu screen, the contents of 'function_menu.wav' may include 'function menu, tuning, song setting, style setting, pedal setting, microphone setting, and audio guide setting'. Accordingly, the user can be aware of not only the button they pressed but also how the contents of the screen are changed according to user manipulation.

The matching tables of FIGS. 4(A) and 4(B) may be defined such that audio guide data GD corresponding to 'tuning, song setting, style setting, pedal setting, microphone setting, and guide setting' are sequentially read after 'function_menu.wav' is read without changing the contents of 'function_menu.wav'. That is, a function ID corresponding to a manipulation of the function button is set to 'a', a function ID corresponding to function menu screen display is set to 'b', and audio guide data GD corresponding to both the function IDs 'a' and 'b' are sequentially read. In this manner, it is possible to switch ON and OFF of reading of the contents of the screen in response to whether the audio guide data corresponding to the function ID 'b' is provided or not. Furthermore, it is possible to provide the same audio guide data GD (audio data corresponding to the function ID 'b') even for different manipulations in a case in which the function button 51 is pressed to display the function menu and another case in which the EXIT button 54 is pressed to re-display the function menu. Accordingly, audio guidance can be easily performed according to situations even in a complicated manipulation system.

In the example shown in FIG. 5(B), the audio guide setting menu is displayed on the touch panel 50, and buttons, faders, switches, etc. to which regions for displaying various parameters of the audio guide function and commands for setting and changing parameters are allocated are arranged in the audio guide setting menu.

In the example shown in FIG. 5(B), the audio guide setting menu displays an on/off state display region 56a in which an audio guide function on button 58a and an audio guide function off button 58b for displaying audio guide function on/off states and for switching the on and off states are arranged, a volume display region 56b in which a fader 57 for indicating the volume value of the current audio guide and for setting or changing the volume value is arranged, a pan setting display region 56c including a knob for setting and changing pan, a reading velocity display region 56d in which a fader 57 for displaying the read velocity of the current audio guide and for setting or changing the read velocity is arranged, and a pitch display region 56e in which a fader 57 for displaying the pitch of the current read voice and for setting or changing the pitch is located. The function IDs 8 and 9 shown in FIG. 4(A) are respectively allocated to the on/off state display region 56a and the volume display region 56b. Other function IDs are allocated to the other regions.

In the parameter value setting screen as shown in FIG. 5(B), when the user touches a parameter display region such as the volume setting region 56b while pressing the audio guide button 52 under the state where the audio guide function is in an on state, 'audio_guide_vol.wav' (audio guide data GD) corresponding to the volume setting region 56b (parameter display region) is read with reference to the matching table of FIG. 4(A). When the user touches a switch (fader, knob or the like) for changing a parameter, a parameter value (which is not a currently set parameter value) corresponding to the touched point is read with reference to the matching table of FIG. 4(B). If the user wants to know the current set value, the user touches the parameter display region within a predetermined time while pressing the audio guide button 52.

In the parameter value setting screen as shown in FIG. 5(B), the audio guide function can sequentially read a parameter name and value. For example, a flag that indicates whether a function corresponding to each function ID has a parameter value is allocated to each function ID and, when a function ID having a flag is selected, audio guide data GD corresponding to a parameter name matched to the function ID and audio guide data GD corresponding to a figure that indicates the current value of the corresponding parameter are sequentially played. More specifically, when the user touches the volume setting region 56b displayed on the screen, shown in FIG. 5(B), while pressing the audio guide button 52 while the audio guide function is on, 'audio_guide_vol.wav' corresponding to the volume setting region 56b is played with reference to the matching table of FIG. 4(A), and then 'value_eight.wav' and 'value_zero.wav' corresponding to the current parameter value '80' are played with reference to the matching table of FIG. 4(B) and a voice 'audio guide volume 8 0' is output from the sound system 19 (shown in FIG. 1).

When it is necessary to set and change the volume value of the audio guide function, the user releases their hand from the audio guide button 52 and then touches the volume setting region 56b again so as to switch volume setting to a selection state and turns the parameter change dial 53 to the left or right to set or change the parameter value.

When the parameter change dial 53 is manipulated, it is preferable to read the value of a selected (set or changed) parameter according to the audio guide function. However, since it is impossible to read all parameter values which continuously change as the parameter change dial 53 is turned, it is preferable to sequentially read parameter names and values when manipulation of the parameter change dial 53 is interrupted for a predetermined time (e.g. for one second) as in the case in which the user touches the volume setting region 56b while pressing the audio guide button 52. When the parameter change dial 53 is manipulated, a parameter name and a parameter value may be read as long as the audio guide function is regardless of whether the audio guide button 52 is pressed or not. Alternatively, a parameter name and a parameter value may be read when the parameter change dial 53 is manipulated only if the audio guide button 52 is pressed.

Since audio guide data GD is audio data such as waveform data, the pitch thereof is changed when a playback velocity thereof (read velocity) is varied. To prevent this, the read velocity and pitch (tone) are changed using a known time stretch or pitch shift technique upon adjustment of the parameters of the read velocity and pitch, displayed in the region 56d or 56e of FIG. 5(B). Accordingly, when audio guide data GD acquired through the Internet is not easy to listen, it is possible to play an audio guide at a velocity and pitch at which the audio guide is easy to listen instead of re-recording audio data at different velocity and pitch.

Furthermore, when the audio guide data GD is played back using an equalizer function that is a function of the electronic musical instrument 100, it is possible to handle a user who is difficult to hear a high pitch sound by boosting the high pitch zone, for example.

In the present embodiment of the invention, as described above, when the audio guide function is on, it is possible to play only a guide voice without executing a function corresponding to a manipulator by operating the manipulator while pressing the audio guide button 52. Accordingly, it is possible to check a function and a parameter, which are allocated to a manipulator that is a function selection unit, through an audio guide, and then easily execute the function or set the parameter.

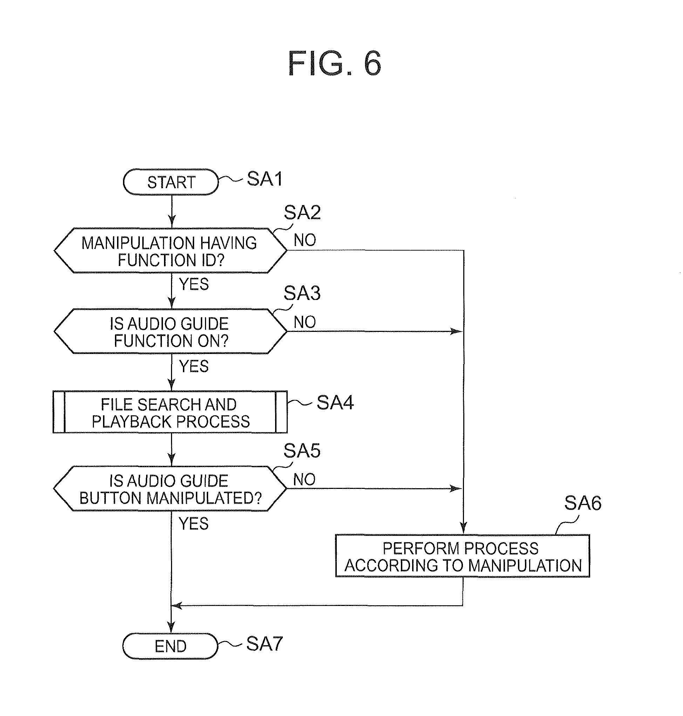

FIG. 6 is a flowchart illustrating an audio guide process according to an embodiment of the present invention. This audio guide process is performed by the CPU 9 shown in FIG. 1 and initiated upon detection of manipulation through the manipulation unit 31 (shown in FIG. 2).

The audio guide process is initiated in step SA1, and it is determined whether a manipulation that causes the audio guide process is a manipulation to which a function ID is allocated (manipulation that requires audio guide) in step SA2. Here, a manipulation to which a function ID is allocated refers to a manipulation for which audio guide is performed when a function ID is allocated to a command executed according to the manipulation and the audio guide function is on, as described above. For example, a function ID is not allocated to a playing operation, such as a manipulation of a keyboard (play manipulator 22) or a pedal, because the playing operation does not require audio guide. Furthermore, in the case of a manipulation of changing a tempo of automatic accompaniment data, a user can clearly recognize the tempo change by listening, and thus the manipulation can be performed without audio guide. Accordingly, a function ID may not be allocated to such a type of manipulation. Audio guidance is needed when setting screens are displayed and setting is changed and checked, and thus function IDs are added to these manipulations (commands corresponding thereto). When the manipulation corresponds to a manipulation to which a function ID is allocated in step SA2, the process flow proceeds to step SA3 indicated by an arrow YES. If the manipulation is not a manipulation to which a function ID is allocated, the process flow proceeds to step SA6 indicated by an arrow NO without performing audio guide, then performs a process according to the manipulation, and thereafter proceeds to step SA7 to end the audio guide process.

In step SA3, it is determined whether the audio guide function is on. When the audio guide function is on, the process flow proceeds to step SA4 indicated by an arrow YES. If the audio guide function is off, the process flow proceeds to step SA6 indicated by an arrow NO without performing audio guidance, then carries out a process according to the corresponding manipulation, and thereafter proceeds to step SA7 to end the audio guide process.

A file search and playback process is performed in step SA4. In the file search and playback process, the storage device 33 (shown in FIG. 2) is searched for audio guide data GD corresponding to the function ID allocated to the manipulation that causes this audio guide process and the searched audio guide data GD is played back. Then, the process flow proceeds to step SA5.

In step SA5, it is determined whether an audio guide button (e.g. the audio guide button 52 shown in FIG. 5) for instructing only an audio guidance to be played is manipulated (pressed) or not. When the audio guide button is manipulated, the process flow proceeds to step SA7 indicated by an arrow YES to simply end the audio guide process. When the audio guide button is not manipulated, the process flow proceeds to step SA6 indicated by an arrow NO, then carries out a process (command) allocated to the manipulation that causes this audio guide process, and thereafter proceeds to step SA7 to end the audio guide process.
The process for determining whether to execute a function corresponding to a manipulation, such as step SA5, may be performed not only through a method using a dedicated audio guide instruction button but also through a process (A) of playing only an audio guide without executing a function corresponding to a manipulation having a function ID when the manipulation is performed once and, when the same manipulation is performed one more time within a predetermined time, executing the function corresponding to the manipulation, or a process (B) of playing only audio guide data GD without executing a function corresponding to a manipulation having a function ID when the manipulation is rapidly performed twice (e.g. a manipulation such as double clicking (rapidly pressing a button twice)) and executing the function corresponding to the manipulation when the manipulation is performed once at normal speed.

In a case in which any of the above methods is used, at least two types of manipulation modes are preferably defined for the manipulation unit 31 shown in FIG. 2, a function of a manipulation is not executed and only audio guide data is played in the first manipulation mode (e.g. a manipulation of pressing the audio guide button 52), whereas the function is executed in the second manipulation mode (e.g. a manipulation without pressing the audio guide button 52). While a file for audio guidance is played (SA4) and the function is executed (SA6) in the second manipulation mode (YES in step SA5) in the case of the flow shown in FIG. 6, it may be possible to only execute the function without performing audio guidance in the second manipulation mode.

FIG. 7 is a flowchart illustrating a file search and playback process performed in step SA5 of FIG. 6.

The file search and playback process is initiated in step SB1, and a file name of audio guide data GD corresponding to the manipulation that causes the audio guide process of FIG. 6 to be performed is checked (acquired) with reference to the matching tables shown in FIGS. 4(A) and 4(B), for example, in step SB2.

Current language setting of the electronic musical instrument 100 is checked in step SB3. Then, it is checked whether there is a path corresponding to a search target for an audio guide file in step SB4. For example, drive D: (a storage region connected to a communication I/F, such as a USB) is set as a search target in advance and memorized in the ROM 8 (which cannot be changed by the user). In this case, when a USB memory is connected as drive D:, the electronic musical instrument 100 determines that the source of the audio guide files exists and the USB memory is searched. If an SD card reader is connected through USB, an SD card is searched. Otherwise, a search target may be defined in the tables of FIGS. 4(A) and 4(B). For example, a corresponding file name may be defined by the path so that the corresponding audio guide file is searched by the path 'D:/Guide/aaa.wav' for each function ID.
In another embodiment, the source of the audio guide files is provisionally located in a server as a search target, which is connectable to the electronic musical instrument 100 through a network such as Internet or LAN. In this case, the path of the search target is provided in the form of an address of the server such as URL. The Electronic musical instrument 100 checks the address (URL) to determine whether the server is accessible or not over the network.
When the path corresponding to a search target exists (namely when the source of the audio guide files exists), the process flow proceeds to step SB5 indicated by an arrow YES. If the path does not exist, the process flow proceeds to step SB12 indicated by an arrow NO, ends the file search and playback process, and returns to the audio guide process of FIG. 6.

In step SB5, the path identified in step SB4 is searched for a language folder (matching language folder) corresponding to the set language checked in step SB3. For example, when 'Japanese' is set as a language, a 'Japanese' folder under the 'GUIDE' folder is searched. When the matching language folder is found, the process flow proceeds to step SB6 indicated by an arrow YES. If the matching language folder is not found, the process flow proceeds to step SB8 indicated by an arrow NO.

In step SB6, the matching language folder detected in step SB5 is searched for audio guide data GD (target file corresponding to the manipulation that causes the audio guide process of FIG. 6 to be initiated) of a target to be played as an audio guide.

In step SB7, it is determined whether the target file is detected in step SB6. When the target file is detected, the process flow proceeds to step SB11 indicated by an arrow YES. If the target file is not detected, the process flow proceeds to step SB8 indicated by an arrow NO.

When the audio guide data GD is not detected by step SB6 in the language folder corresponding to the language checked at step SB3 or the corresponding language holder has not been detected by step SB5, the target file is detected from the folder right under the audio guide folder (e.g. GUIDE folder of FIG. 3) in step SB8. The target file detected in step SB8 is audio guide data GD for which a language is not set. The target file can be data in English or Japanese, or can also be data in other languages.

In step SB9, it is determined whether the target file is detected in step SB8. When the target file is detected, the process flow proceeds to step SB11 indicated by an arrow YES. If the target file is not detected, the process flow proceeds to step SB10 indicated by an arrow NO.

An error (absence of the target file) is signaled through a sound and screen display in step SB10. Then, the process flow proceeds to step SB12 to end the file search and playback process, and returns to the audio guide process of FIG. 6. For example, signaling the error through a sound is performed in such a manner that speech 'No file present' or a warning sound representing the error is output. In this case, it is desirable to store the voice or sound in the ROM 8 shown in FIG. 1 in advance. When the target file is not found, the process flow may directly proceed to step S12 without generating an error message (omitting step SB10). Otherwise, the file name of an audio file that needs to be played is signaled through a voice such that the user creates the audio file. Furthermore, stored speech 'There is no audio file. Do you want to record?' is output, the current state automatically switches to a recording mode when the user agrees, and audio guide data GD is generated.

In step SB11, the audio guide player 45 shown in FIG. 2, for example, plays back the target file detected in step SB6 or step SB8. Then, the process flow proceeds to step SB12 to end the file search and playback process, and returns to the audio guide process of FIG. 6.

While the file search and playback process is ended when the path corresponding to a search target is not present (NO in step SB4) in the above-described example, the process flow may proceed to step SB10 after step SB4 to inform the user that there is no path.

In the above-described example, when the target file is not present in the search target folder, a folder of a layer immediately above the corresponding layer is searched. However, other places (e.g. a further higher layer, a lower layer, a different drive, a network such as the Internet and LAN, etc.) may be searched for the target file. In this case, default audio guide data GD is previously stored on a website of the manufacturer of the electronic musical instrument 100 such that audio guide can be performed while successfully detecting the target file when the electronic musical instrument 100 is connected to the network.

Moreover, when the file name is input slightly differently (due to a difference between an upper case and a lower case, a difference between an em and an en quad, only one different character in a file name, etc.), it may be determined that the file name corresponds to the target file.

FIG. 8 is a flowchart illustrating an audio playback process according to an embodiment of the present invention. This audio playback process is performed by the CPU 9 shown in FIG. 1. For example, the audio playback process is initiated as a process in response to the manipulation of step SA6 of FIG. 6 or a playback process in step SB11 of FIG. 7 when the audio player 34 (shown in FIG. 2) starts to play an audio file.

The audio playback process is initiated in step SC1, and it is determined whether an audio file to be currently played has been selected as the target file in the playback process in step SB11 of FIG. 7, that is, whether the audio file is an audio file for audio guide (audio guide data GD) in step SC2. When the audio file is the audio file for audio guide, the process flow proceeds to step SC3 indicated by an arrow YES. If the audio file does not correspond to the audio file for audio guidance, the process flow proceeds to step SC4 indicated by an arrow NO.

In step SC3, the audio file (audio guide data GD) is played as a sound, which has been subjected to adjustment of a read velocity, pitch and equalizer to be comfortable to hear, in response to playback setting for the audio guide function. Then, the process flow proceeds to step SC5 to end the audio playback process.

In step SC4, the audio file (audio data AD) is played according to playback setting for the audio play function. Then, the process flow proceeds to step SC5 to end the audio playback process.

According to the embodiments of the present invention, it is not necessary to store audio guide data in the electronic musical instrument 100 in advance. Necessary audio guide data can be read from a detachable or rewritable recording medium and played, and thus audio guide data can be freely added, modified and updated.

Since audio guide data is recorded in a general audio file format, a special hardware configuration for audio guide is not needed and load of the electronic musical instrument 100 due to the audio guide function can be alleviated.

Furthermore, it is possible to customize contents (contents of read words), language, sound quality, velocity, etc. of audio guide for the user because the audio guide data can be added, modified and updated.

When an audio file corresponding to a specific function ID is deleted from the recording medium, audio guidance is not performed even when a manipulation corresponding to the deleted function ID is performed. That is, the user can select a function that performs audio guidance and a function that does not perform audio guidance, and thus audio guide may not be used for a function to which the user is accustomed.

Furthermore, audio guide data is stored in a detachable or rewritable recording medium and used for audio guidance. Accordingly, it is possible to easily change a plurality of audio guides through a simple manipulation of changing the recording medium or updating the contents of the recording medium without changing the configuration of the main body of the electronic musical instrument 100. For example, the user can use a guide voice generated by him/her, a guide voice of a famous artist, a guide voice in a different language, etc. Moreover, it is possible to use a guide voice generated by a third person simply by changing the recording medium.

According to the embodiments of the present invention, when audio guidance is performed, only a voice for guiding a function corresponding to a manipulation can be played without executing the function. Accordingly, it is possible to prevent an undesirable function from being erroneously selected and executed.

According to the embodiments of the present invention, audio guide data can be provided through a detachable recording medium or a network after products are shipped. Accordingly, it is not necessary to record a guide voice during development of the electronic musical instrument (a period before initiation of production) and the number of development processes is reduced. Furthermore, generation of audio files (recording work) can be started after development of the electronic musical instrument 100 is completed, and thus it is not necessary to re-develop the electronic musical instrument 100 for specification change.

According to the embodiments of the present invention, since the audio guide function can be implemented inexpensively, it is possible to install the audio guide function in various products and to extend a market of products that were not (could not be) used by blind users. Since products of different types can use the same audio guide data if the products have the same functions, new models requires little development costs.

According to the embodiments of the present invention, the electronic musical instrument 100 can be released without the audio guide data. Accordingly, a user who does not need audio guidance can purchase the electronic instrument 100 without bearing expenses for the audio guide. Furthermore, even a user who needs the audio guide can easily use the audio guide after purchasing the electronic instrument by acquiring a recording medium (USB memory or memory card) in which the audio guide data is recorded from the manufacturer of the electronic musical instrument or a third party and setting the acquired recording medium in the main body of the electronic musical instrument.

In addition, if the user acquires the matching table of function IDs (corresponding to manipulations for implementing functions) and file names from the manufacturer of the products, the user can use a self-created audio file as audio guide data.

While a folder for reading the audio guide data GD is segmented and the same file name is allocated to files corresponding to the same functions to cope with multiple languages in the above-described embodiments, it may be possible to read audio guide data GD having a file name corresponding to a set language by attaching a language code to the start or end of the file name, for example.
In the disclosed embodiments, the matching table is used for defining the correspondence between function IDs and audio guide data. Generally, any type of information other than table format can be used provided that the information is sufficient to identify the audio guide data corresponding to the function. For example, when a given function is selected, an audio file name corresponding to the selected function is written into a predetermined region of RAM 7. CPU 9 refers to the predetermined region of RAM 7 to identify and locate the corresponding audio file (audio guide data GD).
Otherwise, the function ID or name of the function itself may be adapted to identify the audio guide data. For example, when a function having function ID of 001 is selected, an audio file (audio guide data) having a file name containing 001 is identified as the audio guide data corresponding to the selected function. Alternatively, when the selected function has a function name of "Volume", an audio file having a file name containing "Volume" is identified as the corresponding audio file.
In the disclosed embodiments, the audio guide data corresponding to the selected function ID is identified by the file name of the audio file containing the audio guide data. Other methods may be adopted. For example, function IDs of respective functions are provisionally linked to folder names of folders (not file names) containing an audio file. When a function is selected, a folder corresponding to the selected function is located by means of its function ID. Then, an audio file contained in the located folder is reproduced. Otherwise, each function ID is previously linked to a predetermined sequence of characters. On the other hand, a corresponding audio file has meta information (such as ID3 tag of file of mp3 format) containing the predetermined sequence of characters. Namely, the audio file corresponding to the selected function is located by means of the predetermined sequence of the characters. By such a method, the audio guide data corresponding to the function ID of the selected function is identified. In such a case, a file name of the respective file may be freely determined as desired.

The electronic musical instrument (electronic apparatus) 100 according to the embodiments of the present invention is not limited to a music keyboard and can be configured as any form of musical instrument such as a wind instrument, string instrument, percussion, etc. In addition, the electronic musical instrument 100 may be a device capable of reproducing audio data, such as a sound source device having no play manipulator, mixer, etc. since the device capable of reproducing audio data can reproduce the audio guide data GD.

The embodiments of the present invention are not limited to an electronic musical instrument and can be implemented according to a commercial computer in which computer programs corresponding to the embodiments are installed. In this case, a computer program corresponding to each embodiment may be stored in a computer readable non-transitory recording medium such as a CD-ROM and provided to the user. When the computer is connected to a communication network such as a LAN, the Internet, a telephone circuit, etc., computer programs and various types of data may be provided to the user through the communication network.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

## Claims

1. An electronic apparatus having a plurality of functions executable for operating the electronic apparatus, comprising:
a function selection unit that selects a function to be executed;
a storage unit that stores information defining correspondence between a plurality of functions and a plurality of audio data;
an audio data specifying unit that specifies audio data corresponding to the function selected by the function selection unit with reference to the information;
a search target determination unit that determines whether or not a source of the audio data exists as a search target;
a search unit that searches the source for the audio data specified by the audio data specifying unit when the search target determination unit determines that the source exists; and
a playback unit that plays back the audio data searched by the search unit.

2. The electronic apparatus according to claim 1, wherein the function selection unit is manipulated in either of a first manipulation mode or a second manipulation mode, the electronic apparatus further comprising a control unit that reads the audio data corresponding to the selected function from the source and controls the playback unit to play back the read audio data without executing the selected function when the function is selected by the function selection unit in the first manipulation mode, and that executes the function when the function is selected by the function selection unit in the second manipulation mode.

3. The electronic apparatus according to claim 2, wherein the function selection unit has a control corresponding to a function to be executed and a predetermined control so that the function is selected in the first manipulation mode when both the corresponding control and the predetermined control are manipulated and the function is selected in the second manipulation mode when the corresponding control alone is manipulated.

4. The electronic apparatus according to claim 1, further comprising a language change unit that sets a language used in the electronic apparatus,
wherein the search target determination unit determines a source of the audio data according to the language set by the language change unit.

5. The electronic apparatus according to claim 1, wherein the audio data specifying unit specifies audio data corresponding to the selected function, the specified audio data being an audio file reproducible by the playback unit to generate audio guidance for the selected function.

6. The electronic apparatus according to claim 1, wherein the source of the audio data comprises an external storage medium storing the audio data and being connectable to the electronic apparatus, and wherein the search target determination unit determines that the source of the audio data exists if the external storage medium is connected to the electronic apparatus.

7. The electronic apparatus according to claim 1, wherein the source of the audio data comprises a server apparatus providing the audio data and being accessible from the electronic apparatus through a network, and wherein the search target determination unit determines that the source of the audio data exists if the server apparatus is available over the network.

8. The electronic apparatus according to claim 1, wherein the storage unit stores the information in which each function is identified by an identification code, each audio data is composed of an audio file and identified by a file name so that the function and the audio data corresponding to the function are linked to each other by means of the identification code of the function and the file name of the corresponding audio data.

9. The electronic apparatus according to claim 1, wherein the storage unit stores information representing an identification code or a function name of each function, and wherein
each audio data is composed of an audio file having a file name containing the identification code or the function name of each function so that the selected function and the audio data corresponding to the selected function are linked to each other by means of the information representing the identification code or the function name of the selected function.

10. The electronic apparatus according to claim 1, wherein the storage unit stores information in which each function is identified by an identification code, each audio data is composed of an audio file contained in a folder identified by a folder name so that the function and the audio data corresponding to the function are linked to each other by means of the identification code of the function and the folder name of the folder containing the audio file constituting the corresponding audio data.

11. The electronic apparatus according to claim 1, wherein the storage unit stores information in which each function is identified by an identification code containing a sequence of characters, each audio data is composed of an audio file having meta information containing a sequence of characters so that the function and the audio data corresponding to the function are linked to each other by means of the sequence of characters that is contained in the identification code of the function and is also contained in the meta information of the audio file constituting the corresponding audio data.

12. The electronic apparatus according to claim 1, wherein the playback unit includes a speed control for controlling a speed of playing back the audio data.

13. The electronic apparatus according to claim 1, wherein the playback unit includes a pitch control for controlling a pitch of voice played back from the audio data.

14. A machine readable non-transitory storage medium for use in an electronic apparatus that has a plurality of functions for operating the electronic apparatus and that comprises a function selection unit that selects a function to be executed and a storage unit that stores information defining correspondence between a plurality of functions and a plurality of audio data, the machine readable non-transitory storage medium containing an audio guide program executable by the electronic apparatus to perform processing of:
specifying audio data corresponding to the function selected by the function selection unit with reference to the information;
determining whether or not a source of the audio data exists as a search target;
searching the source for the specified audio data when it is determined that the source exists; and
playing back the searched audio data.

15. An audio guide method performed in an electronic apparatus having a plurality of functions for operating the electronic apparatus and comprising a function selection unit that selects a function to be executed and a storage unit that stores information defining correspondence between a plurality of functions and a plurality of audio data, the audio guide method comprising:
specifying audio data corresponding to the function selected by the function selection unit with reference to the information;
determining whether or not a source of the audio data exists as a search target;
searching the source for the specified audio data when it is determined that the source exists; and
playing back the searched audio data.
